# EUROPEAN PATENT APPLICATION

(11) **EP 3 557 839 A1**
(43) Date of publication of application: **23.10.2019**
(21) Application number: 18305485.7
(22) Date of filing: 19.04.2018
(51) Int. Cl.: H04L 29/06, G06F 21/84, G06F 21/56

(54) **METHOD FOR SECURING A COMPUTER SYSTEM**

(71) Applicant: GEMALTO SA, 92190 Meudon (FR)
(72) Inventor: DELHOSTE, Fabrice, 13881 GEMENOS CEDEX (FR); PAILLART, Frédéric, 13881 GEMENOS CEDEX (FR); DANDELOT, Thomas, 13881 Gemenos Cedex (FR)
(74) Representative: Grevin, Emmanuel

(57) **Abstract**

The invention is a method for securing a system (10) including a computer machine (11) and a user interface (12) providing elements to a user. The method comprises the steps of:
- capturing a set (30) of said elements as processed to be perceived by the user through the user interface,
- retrieving a context description (40) reflecting a current execution context of the computer machine,
- identifying in a repository (18) a reference pattern (50) which matches the set and retrieving a context rule (60) predefined for the reference pattern,
- generating a result by evaluating the context rule with respect to the context description and triggering a first preset security action (80) associated with the reference pattern based on the result.

## Description

### (Field of the invention)

The present invention relates to methods for securing computer systems. It relates particularly to methods of securing systems including a computer machine and a user interface.

### (Background of the invention)

Phishing is an existing problem to solve in computer security. Trusted user interface (TUI), is one existing answer to phishing. TUI can be implemented very differently depending on the level of security and many other characteristics.

Today, the variety of software and hardware makes anti-phishing method very hard to achieve. There are some trials along with Trusted Execution Environment (TEE) but they are not yet available broadly and they are limited to a number of use cases (ex: banking payment). Actually, it is simple for hackers to mislead the user by displaying perfect malicious replica of genuine user interface elements.

The rise of App Store and their approval process has successfully eliminated a number of malicious vectors but they have failed to fight against all of them. For instance, one can publish an application which is approved because, even though static analysis techniques are used, it is easy to hide and obfuscate phishing code in what seems a respectful application. Thus a malicious application can display a popup which mimics (i.e. looks like) a window of a genuine application and get sensitive data typed by the user like a password for instance.

There is a need to provide an enhanced solution to detect phishing attempts that use a cloned genuine user interface.

### (Summary of the Invention)

The invention aims at solving the above mentioned technical problem.

An object of the present invention is a system including a computer machine and a user interface providing elements to a user. The computer system comprises a security agent and is configured to capture a set of said elements as processed to be perceived by the user through the user interface. The security agent is configured to retrieve the set and to retrieve a context description reflecting a current execution context of the computer machine. The system is configured to identify, in a repository, a reference pattern matching the set and to retrieve a context rule predefined for the reference pattern. The security agent is configured to generate a result by evaluating the context rule with respect to the context description and to trigger a first preset security action associated with the reference pattern based on the result.

Advantageously, the first preset action may be one of the group comprising: blocking an application which provided the user interface with the set, preventing the display of the set by the user interface, sending an alert signal to a remote system, providing the user with a warning message or replacing the set with a preset data.

Advantageously, the security agent may be configured to secure the computer machine continuously or each time one of said elements is prepared for the user interface.

Advantageously the context rule may take into account at least one item of the group comprising: type of the computer machine, operating system of the computer machine, API or software function currently executed in an execution environment of the computer machine and data previously presented to the user through the user interface.

Advantageously the user interface may be a display or a voice interface.

Advantageously, the computer machine may comprise an operating system and the security agent may be either a software component included in the operating system or a component included in the user interface (i.e. graphics card or voice interface) or embedded in a device separate from the computer machine.

Advantageously, the security agent may be configured:
to identify an application (17) currently executed on the computer machine and which provided the user interface with the set,
to retrieve an applicative rule (70) predefined for said reference pattern, and
to generate a second result by evaluating the application rule with respect to said application and to trigger a second preset security action associated with the reference pattern based on the second result.

Advantageously, the security agent may provide a decision reflecting said evaluation and the user interface may be configured to postpone presentation of the set to the user until the decision of the security agent is taken into account.

Another object of the invention is a method for securing a system including a computer machine and a user interface providing elements to a user. The method comprises the steps of:
- capturing a set of said elements as processed to be perceived by the user through the user interface,
- retrieving a context description reflecting a current execution context of the computer machine,
- identifying in a repository a reference pattern which matches the set and retrieving a context rule predefined for the reference pattern,
- generating a result by evaluating the context rule with respect to the context description and triggering a first preset security action associated with the reference pattern based on the result.

Advantageously, the first preset action may be one of the group comprising: blocking an application which provided the user interface with the set, preventing the display of the set by the user interface, sending an alert signal to a remote system, providing the user with a warning message or replacing the set with a preset data.

Advantageously, the steps may be carried out continuously or each time one of said elements is prepared for the user interface.

Advantageously, the context rule may take into account at least on item of the group comprising: type of the computer machine, operating system of the computer machine, API or software function currently executed in an execution environment of the computer machine and data previously presented to the user through the user interface.

Advantageously, the set may be provided to the user interface to prompt the user to enter sensitive data.

Advantageously, the method may comprise the further steps:
- identifying an application currently executed on the computer machine and which provided the user interface with the set,
- retrieving an applicative rule predefined for said reference pattern, and
- if the evaluation of the applicative rule with respect to the application fails, then triggering a second preset action associated with the reference pattern or with said applicative rule or with the application.

Advantageously, the repository may be a reference model which is populated using machine learning.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of architecture of a system according to the invention; and
- Figure 2 depicts an example of a flow chart for securing the system according to the invention.

### (Detailed description of the preferred embodiments)

The invention may apply to any type of system comprising at least one computer machine and a user interface able to present information to a user. The user interface is preferably a display. It can also be an augmented reality interface, a voice interface, a Braille terminal or a vibrotactile interface for instance. The user interface may comprise several displays, like virtual reality headsets.

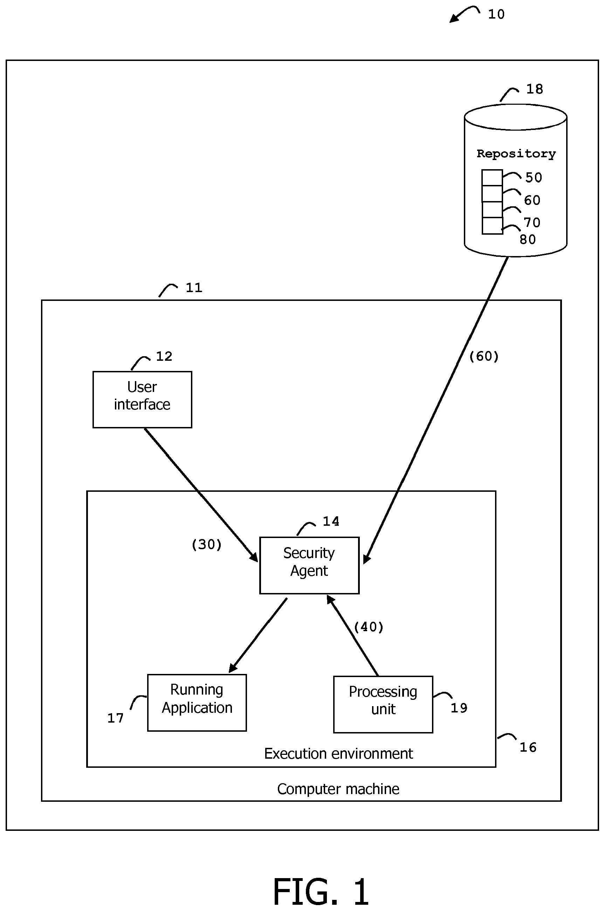

**Figure 1** shows an example of architecture of a system according to the invention.

In this example, the computer machine 11 is a mobile phone and the repository 18 is stored in a machine distinct from the computer machine 11. For instance, the repository 18 may be hosted in a server computer which can be accessed by the mobile phone 11 through a Telecom network, through the Internet or through a local network like Wi-Fi or Bluetooth based networks. Preferably, the repository 18 is stored in the computer machine 11 for performance (execution time) reasons.

The repository 18 comprises a series of sets, each set comprising a reference pattern and a context rule and at least a security action assigned to the reference pattern. Advantageously, each set may also comprise an applicative rule assigned to the reference pattern. Typically, a reference pattern 50 is a screenshot of a dialog or a description of the dialog box and a context rule 60 is the reference of the application authorized to trigger the display of the dialog box.

In this example, the computer machine 11 comprises a display 12 which is a user interface intended to provide elements to the user of the mobile phone.

The computer machine 11 comprises a processing unit 19 and a security agent 14. Preferably, the security agent 14 is a software component executed by the processing unit 19. For instance, the security agent can be a part of the operating system of the computer machine 11. Alternatively, the security agent 14 may be a hardware unit or a combination of hardware and firmware components. For instance, the security agent can be embedded in the graphics card of a display.

The computer machine 11 comprises an execution environment 16 including the processing unit 19, the security agent 14 and a software application 17 which is assumed to be currently executed by the processing unit 19.

The system 10 is configured to capture a set 30 of elements as processed to be perceived by the user through the user interface 12. Typically, the set 30 may be a dialog box or a window presenting data to the user and asking the user to enter his/her login/password. The set 30 may be an image snapshot or a screenshot or an image capture for example.

It is to be noted that the set 30 may comprise a plurality of images intended to be displayed in a very short time so that the user perceives only a single image due to the frequency rate of the display.

In one example, the operating system of the computer machine 11 captures the set 30 and provides the security agent 14 with the set 30 before sending it to the user interface 12. In another example, the user interface 12 captures the set 30 and sends it to the security agent 14 before displaying it.

Depending on the component (user interface or security agent or operating system) in charge of capturing of the set, preferably the system is configured to wait for the security agent decision before presenting (or not) the set to the user through the user interface 12. In other words, one or more components (user interface or security agent or operating system) of the system are adapted to delay/postpone the presentation of the set to the user until the decision of the security agent is taken into account. Alternatively, the system may both present the set to the user and take a security action like sending an alert message.

The system 10 can be configured to capture the set 30 continuously (with a frequency of capture which may be defined according to the targeted security level), each time an element is prepared for the user interface or at any predefined critical time. For example the time where of a dialog box asking the user to enter sensitive data (like credential) is generated to be displayed on the user interface can be considered as a critical time. As another example, each time a message asking the user to do a sensitive action is going to be presented to the user by the user interface can be considered as a critical time. For instance the set can be captured as soon as a route/driving message (i.e. turn left, go straight, turn right, go down, go up, speed up) is going to be delivered to a car driver or to a plane pilot by the vehicle computer or a GPS navigator. Thus the invention may allow to detect phishing attempt based on a false road sign or a false ground marking captured by a semi-autonomous vehicle to adapt its speed and movements.

The security agent 14 is configured to retrieve the set 30 and to retrieve a context description 40 reflecting a current execution context of the computer machine. Typically, the context description 40 can be provided by the processing unit 19. The context description 40 can include the identifier of the running application 17 and other low level technical parameters like the name of the function (i.e. part of executable code of the software application) under execution or current value of selected execution parameters (stack, registers, environment parameters, pointers, etc.). The context description may reflect the state of the runtime environment 16.

In the example of Figure 1, the security agent 14 is configured to identify, in the repository 18, a reference pattern 50 matching the captured set 30 and to retrieve both the context rule 60 predefined for the identified reference pattern and the corresponding security action 80. The security agent 14 is configured to evaluate the context rule 60 with respect to the context description 40 and to trigger the preset security action 80 associated with the reference pattern 50 in case of unsuccessful evaluation. (i.e. unsuccessful result of the evaluation.) For instance, the preset security action 80 may be to stop running the software application 17 currently executed by the processing unit 19. In this case the software application 17 is suspected of using the set 30 (e.g. a dialog box or a window) in a malicious way. Thus the security agent 14 can block the application 17 which provided the user interface 12 with the set 30.

In another example, the preset security action 80 may be one or a combination of the following actions: preventing the display of the set by the user interface, sending an alert signal to a remote system, providing the user with a warning message and replacing the set with another data. The repository 18 can also be updated to track the detection of the reference pattern 50.

In another embodiment, the security agent 14 may relies on an evaluation engine (not drawn at Fig. 1) which is configured to identify, in the repository 18, a reference pattern 50 matching the set, to retrieve the context rule 60 predefined for the identified reference pattern and to send the context rule 60 to the security agent 14. Such an evaluation engine can be implemented in the computer machine 11 or outside the computer machine 11. As an example, the evaluation engine can be embedded in a GPU (graphical processing unit).

The step of identification of a reference pattern 50 that matches the set 30 can be implemented in different ways. This step is carried out by comparing the captured set 30 to the reference patterns stored in the repository 18. Preferably, it may be implemented based on an Artificial Intelligence engine. Alternatively, it may be implemented through a software engine run by the processing unit 19 or a dedicated hardware unit.

The captured set 30 (ex: dialog box) may be considered as matching the reference pattern 50 although there are some differences between them.

A set can comprise the value of a message intended to be presented to the user and some layout elements like the position in the screen, the size the background color and the edge color of the dialog box, the font type, the font color, the font size, and the shape.

If the captured set 30 and a reference pattern differ only by one degree of offset of the tone of a color and by a shift of 2mm for the position then the system can decide that they match one another.

Advantageously, the matching may be performed by assessing a score reflecting the percentage of similarity between the captured set 30 and the identified reference pattern. For example, a score may be computed for all the reference patterns stored in the repository and the identified reference pattern is selected as the one having the highest score.

Mechanisms known in the domain of image (or video or audio) recognition can be used to implement the check of the captured set 30 versus the identified reference pattern. For instance image fingerprinting techniques can be used to evaluate the similarity between the set 30 and the identified reference pattern.

The security agent 14 (or the evaluation engine) may discard an identified reference pattern having a score lower than a preset threshold. Such a threshold can be defined according to the level of security targeted for the system.

The context rule 60 may specify one or any combination in the following list: the type of the computer machine, the type or version of operating system of the computer machine, the API or the software function currently executed in the execution environment 16 and data previously presented to the user through the user interface. It is to be noted that all the information that can appear in the context rule can also appear in the context description 40 and vice versa.

In case the set 30 comprises an applicative rule 70 assigned to the reference pattern 50 (as shown at Figure 1), the security agent 14 is configured to retrieve the applicative rule 70 in addition to the reference pattern 50. The security agent is also configured to identify the application 17 currently under execution on the computer machine 11 and which has initiated the request for submission of the set 30 to the user through the user interface 12. The security agent is also configured to evaluate the application rule 70 with respect to the running (currently executed) application 17 and to trigger one or more predetermined security actions associated with the reference pattern 50 according to the result of the evaluation of the application rule (successful or unsuccessful).

The application rule 70 may specify an authorization (or a permission / privilege) given to a target application to use a reference pattern 50 and the context rule 60. An application can also be authorized to use a predetermined API dedicated to a specific popup or dialog box. The application rule 70 may also specify an authorization given to a target application to use a specific user interface. For example a 3^{rd} party library loaded by an application authorized by a platform or service provider, with the help of digital or cryptographic techniques,(ex: public key cryptography) can be authorized to use a specific popup, a dialog box, a preset logo or a predefined icon from that library.

In one embodiment, the applicative rule 70 may be implemented as a so-called application entitlement. In such a case, the application entitlement contains (or references) at least one reference pattern 50 and at least one context rule 60 that have been approved for this application. Preferably, the application entitlement is signed to prevent malicious changes.

Advantageously, the process of entitlement creation can rely on the repository 18 to approve an entitlement for an application. The repository can be accessed to validate or reject a candidate entitlement. For example, for each (service provider) API call (aiming at displaying a sensitive dialog box) detected in an application, the repository can be used to check that such API call is authorized (or not).

In one embodiment, the applicative rule 70 assigned to the reference pattern 50 can be stored outside the repository 18. (I.e. physically stored in a memory area separate from the one that stores the reference pattern 50.) For instance, the applicative rule 70 can be handled as metadata included in the application itself.

The repository 18 can be enriched in different ways. Preferably, the repository 18 is initially populated with elements provided by a platform provider. As an example, if the computer machine 11 is a smartphone, the platform provider can be the smartphone issuer (or maker). The platform provider may provide a series of trusted elements or samples (like popup, dialog box, or logo) which can be analyzed by a learning engine which generates as many reference patterns. The learning machine can be implemented through machine learning, Locality sensitive hashing (LSH), Deep learning via GPU or neural network chip for example.

The repository (which can be built as a model) can be populated at a first stage then updated and enriched continuously as new services or applications become available or phishing applications are detected.

Preferably, the learning engine is a software component executed by a processor of a computer. It may be hosted in the cloud for instance.

It is to be noted that both genuine (trusted) elements and phishing (fake /clone) elements can be used to generate the reference patterns.

Advantageously, the repository 18 can also be populated with elements provided by a service provider. Usually a service provider is the issuer of an application deployed in the computer machine 11. Typically these elements may be popups, dialog boxes, logos and API or SDK entry points that display dialog boxes.

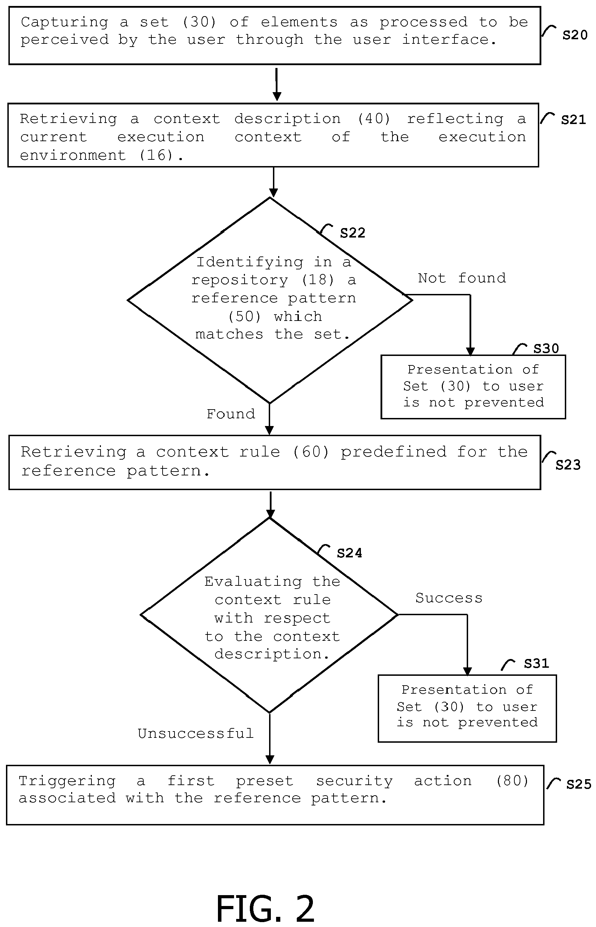

**Figure 2** shows an example of a flow chart for securing the system 10 according to the invention

In this example, the computer machine 11 is a personal computer which embeds the repository 18. The user interface 12 is the display of the personal computer.

At step S20, the system 10 captures a set 30 of elements as processed to be perceived by the user through the user interface 12. The set 30 can be a screen shot or data describing the elements to be displayed on the user interface 12.

At step S21, the security agent 14 retrieves a context description 40 reflecting the current execution context of the execution environment 16.

At step S22, the system searches for a reference pattern (in the repository 18) which matches the set 30.

If no matching reference pattern is found in the repository, the system may allow the user interface 12 to present the set to the user at step S30.

If a matching reference pattern 50 is found, the system retrieves a predefined context rule 60 allocated to the reference pattern 50 at step S23. Then it evaluates the context rule 60 with respect to the context description 40 at step S24.

Preferably, the context rule 60 takes into account at least one of the following items: the type of the computer machine 11, the type and version of the operating system of the computer machine, the API or the software function currently executed in an execution environment 16 of the computer machine. The context rule 60 may also take into account data previously presented to the user through the user interface 12. For instance, a dialog box for entering credit card verification value (CVV) value is presented to the end-user whereas the application workflow defined by the context rule is incorrect.

In case of positive result of the evaluation, the system allows the user interface 12 to present the set to the user (or does not prevent the user interface 12 to present the set to the user) at step S31. Otherwise, the system triggers a first preset security action 80 associated with the reference pattern 50 at step 25.

Advantageously, the first preset action can be one or a combination of the following actions:
a) To block execution of the application which provided the user interface with the set 30.
b) To prevent the display of the set 30 by the user interface.
c) To log the detected security breach attempt in the system.
d) To send an alert signal to a remote system for log or monitoring goal.
e) To provide the user with a warning message so that the user is aware of a phishing attempt.
f) To replace the set 30 with a preset data such as a black square or an "access denied" message.

Preferably, the securing method is continuously performed by the system according to a preset frequency or at random. Optionally, the securing method can be performed each time an element is prepared for the user interface. Such an embodiment can be implemented within a graphic processing unit hosting the security agent for instance.

In another example, the securing method can be performed each time an element is provided to the user interface to prompt the user to enter sensitive data.

The securing method may also comprise additional steps. For example, after step S31, the system can identify the application 17 which is currently executed on the computer machine 11 and which provided the user interface 12 with the set 30. Then the system can retrieve a predefined applicative rule 70 allocated to both the reference pattern 50 and the running application 17.

Then the system can evaluate the applicative rule 70 with respect to the application 17.

In case of positive result of the evaluation, the system allows the user interface 12 to present the set to the user. Otherwise, the system triggers a second preset security action associated with the reference pattern 50 (or with applicative rule 70 or with the application 17).

The second preset security action may be implemented as described above for the first preset security action.

Thus according to the invention, after one or several checks, the security agent decision is taken into account to authorize or prevent the presentation of the set to the user through the user interface.

In one embodiment, the security agent 14 may rely on an evaluation engine (preferably embedded in the computer machine 11) which has access to the content of the repository 18 and is designed to look for a reference pattern matching a candidate screen acquisition, to identify the context rule 60 associated with the found reference pattern 50, to assess whether the current context of execution environment is compliant with the context rule, to retrieve an applicative rule 70 (e.g. entitlement) associated to the application 17 currently executed in the execution environment 16 and to assess whether the application execution is compliant with the applicative rule 70.

It must be understood, within the scope of the invention, that the above-described embodiments are provided as non-limitative examples. In particular, the features described in the presented embodiments and examples may be combined.

According to an embodiment of the invention, the security agent continuously checks the system.

The repository can store a great number of reference patterns and may be split in separate memories.

The invention allows to detect and prevent phishing attacks based on replicating logical user interfaces (like popups or dialogs).

The invention allows to detect and prevent logo (e.g. icon, drawing, and trademark) spoofing.

The architectures of the computer machine and the system shown at Figure 1 are provided as examples only. These architectures may be different.

For example, the security agent may be implemented as a full hardware component located in the user interface or the execution environment of the computer machine.

The user interface may be either integrated in the computer machine or located outside the computer machine. (It is accessible by the computer machine in this case.)

In the above presented embodiments, the user interface is a visual interface. The invention can be implemented with a physical interface which provides users with sound or tactile data.

Although described in the framework of a telecom equipment, the invention also applies to any computer devices.

Unlike solutions that look for differences between suspicious dialog and genuine dialog in order to detect phishing attempts, with the invention, the more the captured dialog (e.g. captured set) looks like the original, the better the system works.

## Claims

1. A system (10) including a computer machine (11) and a user interface (12) providing elements to a user, **characterized in that** the computer system comprises a security agent (14) and is configured to capture a set (30) of said elements as processed to be perceived by the user through the user interface and **in that** the security agent is configured to retrieve the set and to retrieve a context description (40) reflecting a current execution context of the computer machine,
**in that** the system is configured to identify, in a repository (18), a reference pattern (50) matching the set and to retrieve a context rule (60) predefined for the reference pattern,
and **in that** the security agent is configured to generate a result by evaluating the context rule with respect to the context description and to trigger a first preset security action (80) associated with the reference pattern based on the result.

2. The system according to claim 1, wherein said first preset action is one of the group comprising: blocking an application (17) which provided the user interface with the set, preventing the display of the set by the user interface, sending an alert signal to a remote system, providing the user with a warning message or replacing the set with a preset data.

3. The system according to claim 1, wherein the security agent is configured to secure the computer machine continuously or each time one of said elements is prepared for the user interface.

4. The system according to claim 1, wherein said context rule takes into account at least one item of the group comprising: type of the computer machine, operating system of the computer machine, API or software function currently executed in an execution environment (16) of the computer machine and data previously presented to the user through the user interface.

5. The system according to claim 1, wherein said user interface is a display or a voice interface.

6. The system according to claim 1, wherein the computer machine comprises an operating system and wherein the security agent is either a software component included in the operating system or is a component included in the user interface (i.e. graphics card or voice interface) or embedded in a device separate from the computer machine.

7. The system according to claim 1, wherein the security agent is configured:
to identify an application (17) currently executed on the computer machine and which provided the user interface with the set,
to retrieve an applicative rule (70) predefined for said reference pattern, and
to generate a second result by evaluating the application rule with respect to said application and to trigger a second preset security action associated with the reference pattern based on the second result.

8. The system according to claim 1, wherein the security agent (14) provides a decision reflecting said evaluation and wherein the user interface (12) is configured to postpone presentation of the set to the user until the decision of the security agent is taken into account.

9. A method for securing a system (10) including a computer machine (11) and a user interface (12) providing elements to a user,
**characterized in that** the method comprises the steps:
- capturing a set (30) of said elements as processed to be perceived by the user through the user interface,
- retrieving a context description (40) reflecting a current execution context of the computer machine,
- identifying in a repository (18) a reference pattern (50) which matches the set and retrieving a context rule (60) predefined for the reference pattern,
- generating a result by evaluating the context rule with respect to the context description and triggering a first preset security action (80) associated with the reference pattern based on the result.

10. The method according to claim 9, wherein said first preset action is one of the group comprising: blocking an application (17) which provided the user interface with the set, preventing the display of the set by the user interface, sending an alert signal to a remote system, providing the user with a warning message or replacing the set with a preset data.

11. The method according to claim 9, wherein said steps are carried out continuously or each time one of said elements is prepared for the user interface.

12. The method according to claim 9, wherein said context rule takes into account at least on item of the group comprising: type of the computer machine, operating system of the computer machine, API or software function currently executed in an execution environment (16) of the computer machine and data previously presented to the user through the user interface.

13. The method according to claim 9, wherein said set is provided to the user interface to prompt the user to enter sensitive data.

14. The method according to claim 9, wherein the method comprises the further steps:
- identifying an application (17) currently executed on the computer machine and which provided the user interface with the set,
- retrieving an applicative rule (70) predefined for said reference pattern, and
- if the evaluation of the applicative rule with respect to the application fails, then triggering a second preset action associated with the reference pattern or with said applicative rule (70) or with the application (17).

15. The method according to claim 9, wherein the repository is a reference model which is populated using machine learning.
